# EUROPEAN PATENT APPLICATION

(11) **EP 4 691 591 A1**
(43) Date of publication of application: **11.02.2026**
(21) Application number: 24193080.9
(22) Date of filing: 06.08.2024
(51) Int. Cl.: B01D 29/21, B01D 29/96

(54) **FLUID FILTER INSERT AND FLUID FILTER HOUSING**

(71) Applicant: Hengst SE, 48147 Münster (DE)
(72) Inventor: Vinkelau, Christian, 48720 Rosendahl (DE); Heitjans, Martin, 48432 Rheine (DE); Berger, Simon, 48310 Nottuln (DE)
(74) Representative: Lohr, Jöstingmeier & Partner Patent- und Rechtsanwälte mbB

(57) **Abstract**

A fluid filter insert 200 with a gauge 100, wherein the gauge 100 has a first surface 110 extending along or parallel to a longitudinal axis 2 being parallel to a first direction *̅e̅*̅₂, at least one protrusion 120 and at least one protuberance 140, wherein the protuberance 140 and the protrusion 120 extend relative to the first surface 110 in a second direction and define an extension of the protuberance *d*₄₂ in a second direction *̅e̅*̅₂ and an extension of the protrusion *d*₂₂ in the second direction *̅e̅*̅₂ enables to verify that the fluid filter insert 200 is inserted in the correct fluid filter socket, if the fluid filter insert 200 has a bearing 170 movably supporting the protuberance 140 relative to the protrusion 120 and allowing for a movement of the of the protuberance 140 relative to the protrusion 120 in a third direction *̅e̅*̅₃.

## Description

### Field of the invention

The invention relates to a fluid filter insert and/or a fluid filter housing and to a gauge that may be comprised by a fluid filter insert and/or a fluid filter housing. The gauge may comprise at least a first surface extending along or parallel to a longitudinal axis that extends parallel to a first direction. The first surface may have a front-end and a rear-end, wherein the front-end faces in the first direction and the rear-end in a direction opposite to the first direction. The gauge may further comprise at least one protrusion and/or at least one protuberance. The protuberance and the protrusion may extend relative to the first surface in the same second direction and may define an extension of the protuberance in the second direction and an extension of the protrusion in the second direction.

### Description of the related art

In fluid filtering it is a long-established concept to position a replaceable filter medium in a filter housing. During operation, a fluid enters a fluid inlet of the filter housing, flows through the filter medium inside the filter housing and is thereby filtered. The filtered fluid, the so-called filtrate, leaves the filter housing via a fluid outlet, whereas the retentate is held back by the filter medium. These filter media sieve the fluid and are often consumables that need to be replaced in given intervals. To ease replacing, the filter medium is often a part of a fluid filter insert that can be removed from the filter housing and replaced by a new one to avoid that the retentate clogs the filter system.

The filter medium should be adapted to the fluid to be filtered. For example, operating an air filter insert inside an oil filter housing damage the air filter insert. Hence it is preferred if the filter insert comprising the filter medium comprises a gauge enabling to ensure that the filter insert matches the filter housing, i.e. that the filter insert meets the requirements of the respective filtering task.

In some instances, a fluid flow through the filter housing must be blocked if no fluid filter insert or a wrong fluid filter insert is inserted. An example is gasoline filtering: To protect fuel injection nozzles downstream of the filter housing from clogging (which may lead to engine failures due piston or valve overheating) a gasoline flow through the filter housing must be prevented if no fluid filter insert or a fluid filter insert with unknown specification is inserted into filter housing. Applications like these are summarized under the term "no-filter no-run". Hence, in applications like these, only if the correct fluid filter insert is inserted in the filter housing, a valve or another fluid flow control means (e.g. a switch for a fluid pump) must be actuated by the fluid filter insert to enable the elsewise blocked fluid flow.

A similar effect to "no-filter no-run" can be obtained, if the filter housing cover can be closed only, if the correct filter insert has been inserted into the housing. In these cases, a filter housing cover blocking device, which is essentially a locking member, prevents (=(b)locks) the filter housing from being closed. The expected spillage, when not closing the filter housing prevents reasonable users to operate the respective machine. Damage to the machine caused by operating them without filter can be avoided. Herein, a locking member configured to prevent a filter housing from being closed or connected to a fluid line is as well referred to as fluid flow control means, as the at least intended effect is the same.

To avoid manipulation of the fluid flow control means, the fluid filter insert should have a unique feature that matches the fluid control means. In this sense the unique feature is a gauge, i.e. a structure that allows to test (= to gauge) the fluid control means of the filter housing and thereby allows for the actuation of the fluid control means. If the gauge matches with the interface for actuating the fluid control means the latter can be actuated by the fluid filter insert.

### Summary of the invention

The problem to be solved by the invention is to provide a gauge for a fluid filter insert and/or a fluid filter housing.

Solutions of the problem are described in the independent claims. The dependent claims relate to further improvements of the invention.

In an example, the invention provides a gauge for a fluid filter insert and/or fluid filter insert housing. As the interfaces of the gauge and the fluid flow control means must be mutually complementary, the interfaces of the items can be swapped. Herein, unless explicitly mentioned it is assumed that the gauge is a preferably integral part of the fluid filter insert to render the description of the invention more vivid. However other applications of the gauge shall not be excluded, possible example applications include but are not limited to ski-bindings (matches the ski-boot the binding?), brake systems (matches the brake pad the caliper-brake disk system?), Plug-socket connectors, etc. Generally, the gauge may be used to verify, that the counterpart of the gauge comprising device is adapted to be operated using the gauge comprising device. If the gauge is an integral part of the fluid filter insert, the fluid filter insert has all features of the gauge, i.e. the first surface with all or a subset of its features may be integrated into the fluid filter insert. The term "gauge" can hence be replaced by "fluid filter insert" or any other item into which the gauge has been integrated.

The gauge may have a first surface. The first surface may extend along or parallel to a longitudinal axis. In the simplest example the surface may be a rectangle. But it is not required that the surface is planar or flat: For example, the rectangle (herein used as a pars pro toto for any flat surface, e.g. a flat polygon, an oval, etc.) can for example be bent, which thereby becomes a cylindrical surface or at least a segment thereof. Hence, in another an example, the first surface may be a cylindrical surface or a segment thereof (for the definition of a cylindrical surface see Handbook of Mathematics, Bronshtein, Semedyayev, Musiol, Muehlig; Springer Berlin 2007, Chapter 3.3.4; ISBN 978-3-540-72121-5). Only to avoid misunderstandings, the "bent rectangle" example comes only under the superordinate term of a cylindrical surface, however, is not a synonym. To render it more vivid and less mathematical, the first surface may be for example an inner surface or an outer surface of a conduit. The conduit can be an integral part of a fluid filter insert, or in other words, the conduit may be comprised by the fluid filter insert.

Although the cylindrical surface is a particularly preferred embodiment, other surface shapes are as well possible: For example, the first surface can be a (only) section (i.e. a segment) of a cylindrical surface. However, it is preferred, that the first surface extends along or parallel to a longitudinal axis. This longitudinal axis may be the respective cylinder axis. In an example, the first surface may extend straight in the first direction *̅e̅*̅₁. Herein, it is assumed for simplicity that the longitudinal axis extends parallel to a first direction *̅e̅*̅₁ and that the first surface has a front-end and a rear-end. The front-end may face in the first direction *̅e̅*̅₁ and may hence limit the first surface's extension in the first direction. The second end may face in a direction -*̅e̅*̅₁, i.e. opposite to the first direction and may hence limit the first surface's extension in the opposite direction (relative to the first direction). The first surface is preferably a bearing surface, e.g. a plain bearing surface, along which the gauge may be advanced forth and back, at least essentially parallel to the first direction *̅e̅*̅₁. The first surface is hence not necessarily continuous, but it for conceptual simplicity this may be assumed.

The gauge may further comprise at least one protrusion and at least one protuberance. The terms protrusion and protuberance are usually synonyms and used herein only to linguistically distinguish two pieces that elsewise could be called "first protrusion" and "second protrusion" or likewise "first protuberance" and "second protuberance". As usual, "protrusion" and a "protuberance" are herein synonyms describing a piece of matter that extends from a reference surface in a direction that does not lay in the surface or in other words that extends in a direction being linearly independent to the directions laying in the surface (at the location of the protrusion). In yet other words a protrusion as well as a protuberance extends in a direction that a has component being normal to the section of the reference surface from which it extends. Typical examples of protrusions and protuberances are pins, trunnions, webs, cams, etc.

There is no theoretical upper limit of the number of the protrusions and protuberances on the first surface, but in practice numbers higher than 5 or even 10, 20, 50 or 100 of each should be avoided. These numbers may be considered as preferred upper boundaries in case it should be legally required to define such boundary.

It is preferred, if the protuberance and the protrusion extend relative to the first surface in the same second direction *̅e̅*̅₂ and define an extension of the protuberance in the second direction *̅e̅*̅₂ and an extension of the protrusion in the second direction *̅e̅*̅₂. Hence, the second direction *̅e̅*̅₂ is preferably linearly independent from the first direction *̅e̅*̅₁. Particularly preferred, but not necessarily the first direction *̅e̅*̅₁ and the second direction *̅e̅*̅₂ are orthogonal, i.e. *̅e̅*̅₁ · *̅e̅*̅₂ = 0 (it is implicit that |*̅e̅*̅₁| # 0 and |*̅e̅*̅₂| ≠ 0). In an example, cylinder coordinates may be used. In this example, the first direction *̅e̅*̅₁ may be the axial direction and the second direction *̅e̅*̅₂ may be the radial direction. Other coordinate system (e.g. cartesian coordinates) may as well be used, the concept remains the same.

The protrusion and/or the protuberance may have a protrusion axis or protuberance axis, respectively. These protrusion axis and/or protuberance axis may but do not need to be parallel. Only for conceptual simplicity, herein, it may be assumed that a protrusion axis and/or protuberance axis is defined and that these are perpendicular to the tangent(s) of the first surface at the point at which protrusion axis and/or protruberance axis, respectively, intersect the first surface. However, it is emphasized that this orientation of the protrusion and/or the protuberance is only a preferred example. All that is required is that the protrusion and/or the protuberance, respectively, extend from the first surface and that the vectors describing the directions of the extensions have a non-vanishing *̅e̅*̅₂-component. This is herein referred to as the protrusion and/or the protuberance extend in the *̅e̅*̅₂-direction.

It is particularly preferred, if at least one bearing movably supports the at least one protuberance relative to the at least one protrusion. The at least one bearing may be configured to allow for a movement of the protuberance relative to the protrusion in at least a third direction ±*̅e̅*̅₃. In the above example of cylinder coordinates, the third direction *̅e̅*̅₃ may be the azimuthal direction, again it is emphasized that other directions *̅e̅*̅₃ can be selected as well. However, it is preferred that *̅e̅*̅₃ is linearly independent with *̅e̅*̅₂ and preferably as well with *̅e̅*̅₁.

The at least one bearing may preferably define a minimal and/or maximal distance between the protuberance relative to the protrusion in the first direction *̅e̅*̅₁. In other words, the bearing may be configured to restrict (or even inhibit) a movement of the protuberance relative to the protrusion parallel to the longitudinal axis, i.e. in the first direction *̅e̅*̅₁ and/or its opposite direction -*̅e̅*̅₁ (hereinafter briefly ±*̅e̅*̅₁). The bearing may as well be configured to restrict (or even inhibit) a movement of the protuberance relative to the protrusion in the second direction *̅e̅*̅₂ and its opposite direction -*̅e̅*̅₂ (hereinafter briefly ±*̅e̅*̅₂). But the bearing is configured to enable a movement of the protuberance relative to the protrusion in the third direction ±*̅e̅*̅₃ (i.e. parallel and antiparallel to the third direction *̅e̅*̅₃) at least in given range. In this sense the protuberance may float relative to the protrusion parallel and antiparallel to the third direction *̅e̅*̅₃, while the bearing preferably imposes constraints in other directions, e.g. the first direction ±*̅e̅*̅₁ and/or the second direction ±*̅e̅*̅₂. As already apparent, the third direction *̅e̅*̅₃ is preferably linearly independent to the first direction *̅e̅*̅₁ and may extend parallel to the first surface. For example, if the first surface is a (e.g. circular) cylindrical surface, the third direction *̅e̅*̅₃ may be the azimuthal direction.

The bearing may hence enable to transmit a force from the gauge in the first direction *̅e̅*̅₁ (or -*̅e̅*̅₁) via the protrusion(s), while the protrusion(s) can float forth and back at least in a given range along the third direction *̅e̅*̅₃ relative to the protuberance(s). This floating allows the protrusion and the protuberance to be guided by a rails and/or trenches that have a non-constant distance while inserting the gauge (e.g. parallel to the first direction *ê*1) into its counterpart. Coming back to the example of a fluid filter insert comprising the gauge, when inserting the gauge by advancing it in the first direction *̅e̅*̅₁ into a fluid filter housing, the protrusion and the protuberance may engage with or into corresponding guides (such as rails, trenches, ...) that extend along the first direction *̅e̅*̅₁ but have a varying distance. The bearing allows to adapt the distance in the third direction *̅e̅*̅₃ between the protrusion and the protuberance to a change of the distance between the corresponding guides. An example thereof will be explained below in more detail.

The bearing can be a plain bearing or a rolling bearing (such as ball bearing, a roller bearing, etc.), but the invention is not limited to these, it can as well be a flexible joint, such as a film hinge.

The ability of the protrusion and/or the protuberance to transfer a force pointing in the first direction (due to the bearing) allows to actuate a fluid flow control means (e.g. a filter housing cover blocking device) by applying the corresponding force to the gauge and hence to the fluid filter insert. The ability of the protrusion and the protuberance to float relative to each other allows to test by using the guide rails this ability while orienting the gauge with respect to the third direction *̅e̅*̅₃. Using the guide rails to test the ability of the protrusion and the protuberance to float relative to each other means that the gauge may be adavanced in the first direction while the protrusion and the protuberance engage with the guide rails. Assuming the bearing would not be present of ill-configured, the movement of the gauge would be blocked by the guide rails having a non-constant distance measured in the *̅e̅*̅₃ direction as a function of the *̅e̅*̅₁ coordinate.

As already apparent, the dimensions of the (at least one) protrusion and the (at least one) protuberance in the third direction *̅e̅*̅₃ is preferably limited or in other words, preferably neither the protrusion nor the protuberance are closed rings that extend along the third direction *̅e̅*̅₃.

If the protrusion is firmly (i.e. non movably in the third direction *̅e̅*̅₃) attached to the first surface, the protrusion may in addition serve to orient the first surface and hence the gauge relative to its counterpart, which may be, e.g., the filter housing. The gauge may serve the purpose of aligning and positioning a part (e.g. a fluid filter insert comprising the gauge) relative to the respective counterpart (e.g. the fluid filter housing).

As already apparent, the third direction *̅e̅*̅₃ may be linearly independent from the first direction *̅e̅*̅₁ and/or the second direction *̅e̅*̅₂. The third direction *̅e̅*̅₃ may for example extend parallel to and/or in the first surface. Assuming the first surface is a rectangle, the first direction *̅e̅*̅₁ may for example be parallel to the longer edges of the rectangle, the second direction *̅e̅*̅₂ may be normal to the rectangle and the third direction *̅e̅*̅₃ may be parallel to the shorter edges of the rectangle. In particular, if the first surface is a (e.g. circular) cylindrical surface or section of a circular cylindrical surface, the first direction *̅e̅*̅₁ may be parallel to the cylinder axis, the second direction *̅e̅*̅₂ may be the radial direction and the third direction *̅e̅*̅₃ may be the azimuthal direction. These examples shall not be construed as limiting but instead understood as simple and hence vivid examples.

Preferably, the protrusion and/or the protuberance (each) define a first block surface facing towards the front-end of the first surface. This enables to actuate an actuator when shifting the gauge in the first direction by transferring a force from the gauge to the actuator. The actuator can be, e.g., the above-mentioned fluid flow control means (e.g. a valve actuator, a pump switch and/or a filter housing cover blocking device).

In a preferred example, a first distance from the first block to the front-end is smaller or greater than a first distance from the second block to the front-end (i.e. non-equal ≠). This allows to use the distance between the two blocks as a gauging parameter.

Preferably, the protrusion and the protuberance do not overlap in the first direction. In slightly different words, there is preferably no axial overlap of the protrusion and the protuberance. This enables the protuberance to "float" (e.g. along the first surface) relative to the protrusion in the third direction *̅e̅*̅₃ without being blocked by the protrusion, even if the protrusion has an overlap with the protuberance in their respective dimensions in the second direction *̅e̅*̅₂. Such overlap with respect to the second direction *̅e̅*̅₂ is preferred, as it allows to guide both, the protuberance and the protrusion by a single guide rail and at a given point spilt the guide rail in two rails of different depths, thereby obtaining a switch rail configured to discriminate the protrusion and the protuberance by their extension in the second directions *̅e̅*̅₂. For example, the shorter one of the protuberance and the protrusion can be distinguished from the respective other of the protuberance and the protrusion by the depth of the respective guide rail. It is hence pre-defined which of the two enters which of the two rails and this can be used to ensure that only the correct gauge may be shifted along the guide rail into the two rails.

In other words, it is preferred, if the extension of the protrusion in the second direction *̅e̅*̅₂ over the first surface differs from the extension of the protuberance in the second direction *̅e̅*̅₂ over the first surface. This allows to initially guide the protrusion and the protuberance by a single guide rail and discriminate the two as already explained.

Going back to the example, in the in which the first surface is a (e.g. circular) first cylinder surface with a cylinder axis, the first cylinder surface may be for example at least a portion of an inner surface of a conduit or at least a portion of a peripheral surface of the conduit. The conduit may be comprised, e.g., by a fluid filter insert. In this case, the longitudinal axis may be the cylinder axis. Further, the bearing may be a rotary bearing and the first cylindrical surface may be an inner surface of the conduit and the distance of the protrusion to the rotational axis being defined by the bearing may preferably be shorter or longer (i.e. non-equal ≠ ) than the distance of the protuberance to the longitudinal axis. Alternatively or in addition, the first cylindrical surface can be a peripheral surface of the/a conduit and the distance between the radially outward pointing end of the protrusion and the longitudinal axis may be smaller or greater (i.e. non-equal ≠) than the distance between the radially outward pointing end of the protuberance and the longitudinal axis.

If the rotational axis is parallel to the longitudinal axis within an error margin of ±δ, wherein *δ* ∈ {45°, 30°, 15°, 10°, 5°, 2.5°, 1°, 0.5°, 0°}, the construction is easy to manufacture, and the gauge is easy to handle during its use. Smaller values of *δ* are preferred.

In an example, the conduit may have a conduit wall wherein the first surface may be defined by the conduit wall. The conduit wall may encircle a conduit volume. The protrusion may be firmly attached to and/or integrally formed with the conduit wall, e.g. to a first sleeve of the conduit wall. This allows to orient the first surface and hence the gauge azimuthally, axially and radially relative to its counterpart, for example to thereby ensure that sealing surfaces meet each other as intended. In consequence, the device comprising the gauge, e.g. a filter insert, may be oriented relative to its respective counterpart.

Preferably, a second sleeve may be connected by rotary bearing to the first sleeve. In a preferred example the first sleeve comprises a first bearing surface of the bearing and the second sleeve may comprise a second bearing surface of the bearing. The first bearing surface and/or the second bearing surface may be, e.g., a plain bearing surface or a bearing race. The conduit may hence comprise the first sleeve and the second sleeve.

The first bearing surface may movably support the second bearing surface.

The protuberance can be firmly attached to and/or integrally formed with the second sleeve or a portion of the second sleeve and may extend from the second sleeve, in the same direction with respect to the longitudinal axis as the protrusion from the first sleeve. This construction provides a robust and at the same time easy to assemble while precise gauge. This holds in particular, if the protrusion is firmly attached to and/or integrally formed with the first sleeve of the conduit wall (in addition or as an alternative).

For example, one of the sleeves (i.e. for example the first sleeve or the second sleeve) may have an annular grove. Preferably, the annular grove is centered on the conduit axis, which may be the rotational axis. In addition or alternatively, the respective other sleeve (i.e. for example the second sleeve or the first sleeve) may have at least one engaging projection. It is preferred if the at least one engaging projection engages into the annular groove. This provides a positive interlocking of the two sleeves relative to the first direction *̅e̅*̅₁, while allowing for a rotation of the two sleeves relative to the conduit wall and/or the protrusion (and hence forth and back along third direction *̅e̅*̅₃). Such rotational bearing is simple to manufacture with low tolerances and reliable, in particular if the at the least one engaging projection is attached to or integrally formed with a land of the corresponding sleeve.

For example, the protuberance may extend from an inner surface of the second sleeve towards the conduit axis and/or the rotational axis and/or longitudinal axis (which axis are preferably at least essentially identical).

In addition or alternatively, the inner surface of the second sleeve may be flush with the inner surface of the first sleeve. In another example the protuberance may extend from a peripheral surface of the sleeve away from the rotational axis and/or the longitudinal axis. As well in the latter case, the peripheral surface of the second sleeve is preferably at least essentially flush with the peripheral surface of the first sleeve. These measures ease handling of the gauge when inserting it into its respective counterpart.

It is preferred, if one of the sleeves has a flange, wherein the flange abuts an end of the respective other sleeve. This renders assembly of the gauge particularly easy.

A counterpart for the gauge may be a filter housing with a filter volume configured to receive a fluid filter insert, in particular to receive the fluid filter insert with the gauge being described herein.

The filter housing may comprise a socket with a fluid duct configured to be (preferably sealingly) connected to a/the conduit of the fluid filter insert. The filter housing preferably comprises a guide tube with a distal end, wherein the distal end may extend over the fluid duct into the filter volume configured to accommodate the filter insert. In other words, the portion of the guide tube that points away from the socket is herein referred to as "distal end". The end facing towards the socket cold hence be referred to as the proximal end.

The guide tube may have a guide tube axis and a peripheral surface, wherein the guide tube's peripheral surface may have a first groove and/or a second groove each having a groove opening facing radially outwards relative to the guide tube axis. The first and the second groove may be considered as rails or guides for the protrusion and the protuberance, respectively. The first groove and the second groove may be open in the axial direction at least towards the distal end of the guide tube. This enable to insert the guide tube into the respective gauge, and thereby inserting the protrusion and the protuberance into the grooves.

Preferably, the (e.g. azimuthal) distance between the first groove and the second groove varies as a function of the first coordinate (e.g. the axial coordinate). In other words, the (e.g. azimuthal) distance may vary along the longitudinal extension of the first groove and the second groove or in yet other words with the distance from the distal end of the guide tube. Thereby, the gauge and thus the fluid filter insert can be shifted in the first direction towards the socket. The azimuthal distance is only a preferred example for direction being linearly independent from the direction in which the grooves extend. Only to provide a vivid example, it has been assumed that the first groove and the second groove extend axially (along the first direction *̅e̅*̅₁) and radially (along the second direction *̅e̅*̅₂), and hence the azimuthal distance (i.e. the distance measured in the third direction *e̅e̅*₃) may vary. In case of a housing for a box filter cartesian coordinates may be preferred, but the concept remains the same.

Preferably, the filter housing further comprises a shifting member. The shifting member may be rotatably supported relative to the guide tube and has at least a first (e.g. azimuthal) position and a second (e.g. azimuthal) position. Generalizing, the azimuthal position is only an example for a position being defined by the third direction *̅e̅*̅₃. Hence moving the shifting member from its first position to its second position changes of the corresponding value of the third coordinate, wherein the third coordinate is the coordinate being associated to the third direction *̅e̅*̅₃ (as usual the value of the *n^{th}*-coordinate describes the extension of a vector in the *n^{th}* direction *e̅ₙ*, *n* ∈ {1, 2, 3}).

The shifting member may comprise a third groove and a fourth groove, each having an open first end facing towards the distal end of the tube and a second end facing at least essentially in the opposite direction. If the shifting member is in its first azimuthal position, the open first end of the third groove aligns with the first groove and the open first end of the fourth groove does not align with the second groove. In an example, aligned may indicate that a pin can be shifted from an end of the first grove into the opposed end a corresponding groove via the third groove, and not aligned indicates that shifting a pin from the distal end of a groove into an end of the other groove is blocked, e.g. by an abutment of the shifting member. For example, the abutment can be a distally facing surface, e.g., of a side wall of the third and/or fourth groove. In another example, aligned may indicate that a pin can be shifted through a portion of the first groove while engaging in both, the first groove and the third groove simultaneously, and not aligned indicates that shifting a pin through the portion groove is blocked, e.g. by an abutment of the shifting member. Alignment and non-alignment of the second and fourth groove can be explained mutatis mutandis, i.e. by simply replacing the term "first groove" by "second groove" and "third groove" by "fourth groove" in the two examples.

Preferably, if the shifting member in its second azimuthal position, the end section of the third groove aligns with the first groove and the open distal end of the fourth groove aligns with the second groove. When advancing the gauge towards the socket, the protrusion may enter the third groove (assuming the shifting member is in its first position) and by the movement of the gauge towards the socket, the protrusion shifts the shifting member into its second azimuthal position, thereby freeing the path for protuberance that can subsequently be shifted into the fourth groove and subsequently actuate a fluid flow control means.

It is particularly preferred if the shifting member has a third (e.g. azimuthal) position. Further, if the shifting member is in the third azimuthal position, the open distal end of the fourth groove preferably does not align with the second groove and the second end of the fourth groove does align with the second groove. This implies that shifting the protuberance towards the socket, shifts the shifting member into its third (e.g. azimuthal) position. The shifting member may be or be coupled to a fluid flow control means. For example, shifting the shifting member into the third position may cause a control valve to open or a pump switch to close. In addition or alternatively, the shifting member may be or be coupled to a filter housing cover blocking device, being shifted into an unblocking position or orientation if the shifting member is shifted in the third (e.g. azimuthal) position.

Hence, the shifting member is preferably coupled to at least one of a valve member, a shifting member position sensor, a filter housing cover blocking device and/or a locking member. It is further preferred that a movement of the shifting member from its first position into its second position and/or into its third position causes at least one of:
(i) a shift of the valve member from a closed position into an open position, thereby enabling a fluid flow from a fluid inlet of the fluid filter housing through the duct and/or from the duct to a fluid outlet of the fluid filter,
(ii) the shifting member sensor to provide a signal being different from a signal of the shifting member sensor if the shifting member is in the first azimuthal position,
(iii) a filter housing cover blocking device and/or a locking member to free a closing path of a filter housing cover.

In a particularly preferred example, the shifting member is biased towards its first position.

Preferably, the gauge and/or a fluid filter with the gauge and/or the filter housing are bundled to form a kit.

### Brief Description of the Drawings

In the following, the invention will be described by way of example, without limitation of the general inventive concept, on examples of embodiment with reference to the drawings.
Figure 1 presents a view of a first example gauge
Figure 2 presents a sectional view of the example gauge of FIG. 1 along section plane A-A as indicated in FIG.1.
Figure 3 presents a second example gauge,
Figure 4 presents a sectional view of the example gauge of Fig. 3 along plane B-B (see FIG. 5),
Figure 5 presents a sectional view of the example gauge of Fig. 3 along plane C-C in FIG. 4,
Figure 6 presents a partially assembled fluid filter system,
Figure 7 presents a sectional view of a fluid filter insert with a gauge along plane D-D, e.g. for the system of FIG. 6,
Figure 8 presents a sectional view of the fluid filter insert along plane D-D fluid
Figure 9 presents a counterpart for the gauges in FIGs. 3 to 5, 7 and 8
Figure 10 presents a counterpart with a shifting member in a first position,
Figure 12 presents the counterpart with the shifting member in an intermediate position,

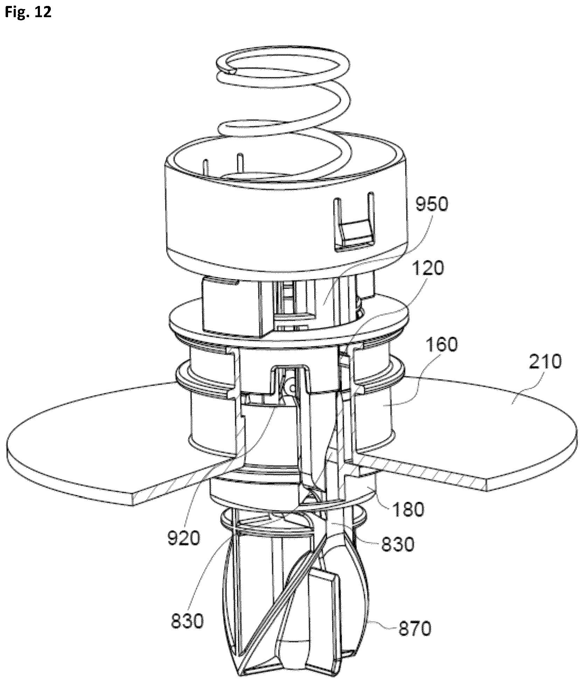

Figure 12 presents the counterpart with the shifting member in a second position,

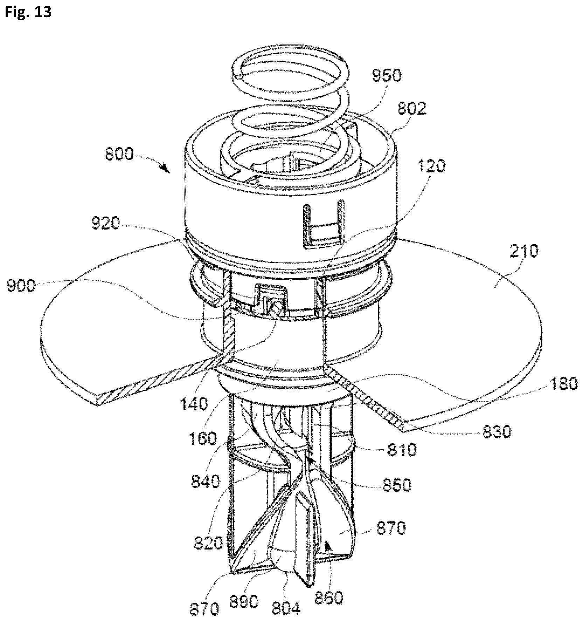

Figure 13 presents the counterpart with the shifting member in a second position,

### Detailed Description of the Drawings

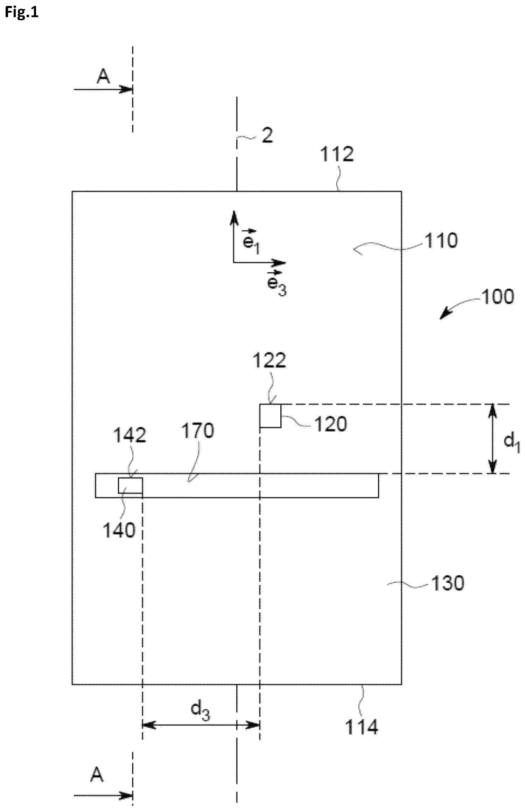

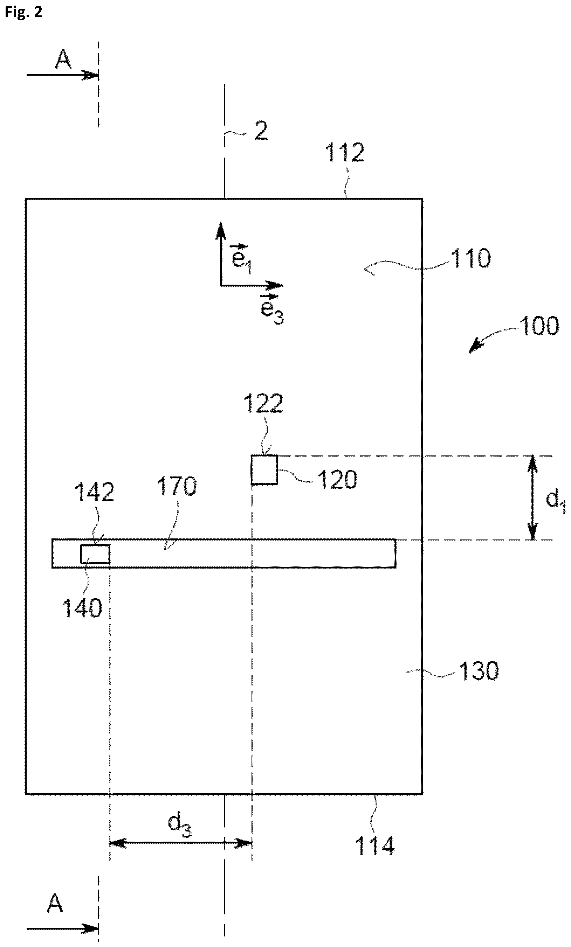

In FIGs 1 and 2 a first example of a gauge 100 is shown is shown. The gauge 100 may have a longitudinal axis 2. The longitudinal axis 2 preferably extends parallel to a first direction *̅e̅*̅₁. A first surface 110 may extend at least essentially parallel to the longitudinal axis 2 and hence along the first direction *̅e̅*̅₁. In this sense the first direction may be considered to lay in the first surface.

The first surface 110 may be delimited in a first direction *̅e̅*̅₁ by a front-end 112 and in the respective opposite direction -*̅e̅*̅₁ by a rear-end 114. The front-end 112 may hence face in the first direction *̅e̅*̅₁ and may thus limit the first surface's extension in the first direction *̅e̅*̅₁. The rear-end 114 may face in a direction -*̅e̅*̅₁ i.e. opposite to the first direction *̅e̅*̅₁ and may hence limit the first surface's extension in the opposite direction of the first direction.

At least one protrusion 120 may extend from the first surface 110 in a second direction *̅e̅*̅₂. The second direction is indicated FIG. 2 and in FIG. 1 perpendicular to the drawing plane. Relative to the boundaries of the first surface 110, the location of the protrusion 120 is preferably fixed. For example, the protrusion 120 may be firmly attached to the first surface 110 or may be unitary with a body 130, wherein the body 130 may be delimited in the second direction at least inter alia by the first surface 110. The protrusion may have a surface 122 facing in the forward direction, i.e. in the first direction *̅e̅*̅₁. This surface 122 may be used as a first block surface 122 of the gauge and is hereinafter referred to as such.

The gauge 100 may further comprise at least one protuberance 140, the protuberance 140 could as well be referred to as a second protrusion 140, but for linguistic simplicity two different terms having the same notion are used to clearly distinguish between these two elements of the gauge 100.

Like the protrusion 120, the protuberance 140 may have a block surface, which is in this context referred to as second block surface 142. The first block surface 122 and the second block surface 142 are spaced by distance *d*₁, being measured parallel to the first direction *̅e̅*̅₁. In other words, *d*₁ is the absolute value of the *̅e̅*̅₁ component of the distance vector pointing from one of the two block surfaces 122, 142 to the respective other block surface 142, 122.

The protuberance 140 may extend relative to the first surface in the same direction as the protrusion 120, which is in this example the second direction *̅e̅*̅₂. The extensions of the protrusion 120 and the protuberance 140 over the first surface 110 are indicated in FIG. 2 with *d*₂₂ and *d*₄₂, respectively. As can be seen and will be explained below in more detail, it is preferred if the protrusion 120 and the protuberance 140 can be distinguished by their respective extensions *d*₂₂ and *d*₄₂ over the first surface 110, i.e. if *d*₂₂ ≠ *d*₄₂.

When sliding the gauge 100 through its counterpart, the protrusion 120 and the protuberance 140 can be guided initially by a single rail and later one an extension selective switch may be used to guide the protrusion 120 to a different rail than the protuberance 140. The axial positions of the protrusion 120 and as well the protuberance 140 may each be at least essentially constant. Accordingly, advancing the gauge 100 in the forward direction (i.e. the first direction *̅e̅*̅₁) relative to the counterpart allows to shift sensing means or actuation means (e.g. fluid flow control means such as a valve member, a switch button and/or a filter housing cover blocking device) of the counterpart by the first block surface 122 and by the second block surface 142 and/or the front-end 112. Using the gauge 100 hence allows to test, by the gauge, if the distance *d*₃ can be adjusted in the third direction, if a given set of extensions *d*₂₂, *d*₄₂ is realized at a given distance *d*₁

The protuberance 140 may be movably supported relative to the at least one protrusion 120 by at least one bearing 170. Like in the example of FIGs.1 and 2, the bearing 170 may be a linear bearing allowing for a movement of the protuberance 140 relative to the protrusion 120 in a third direction *̅e̅*̅₃ (see FIG. 1), but other types of bearings may be used as well. A movement of the protuberance 140 hence allows for a change of the spacing *d*₃ (being measured in the third direction *̅e̅*̅₃, see FIG. 1) between the protrusion 120 and the protuberance 140. At this point, it should be noted that in the example of FIG. 1 and 2, the three directions *̅e̅*̅₁, *̅e̅*̅₂ and *̅e̅*̅₃ are shown to be perpendicular to each other, this is, however, not required. It is implicit that the three directions *̅e̅*̅₁, *̅e̅*̅₂ and e̅₃ are linear independent, i.e. *̅e̅*̅₁ and *̅e̅*̅₂ as well as *̅e̅*̅₁ and *̅e̅*̅₃ as well as *̅e̅*̅₂ and *̅e̅*̅₃ are linear independent.

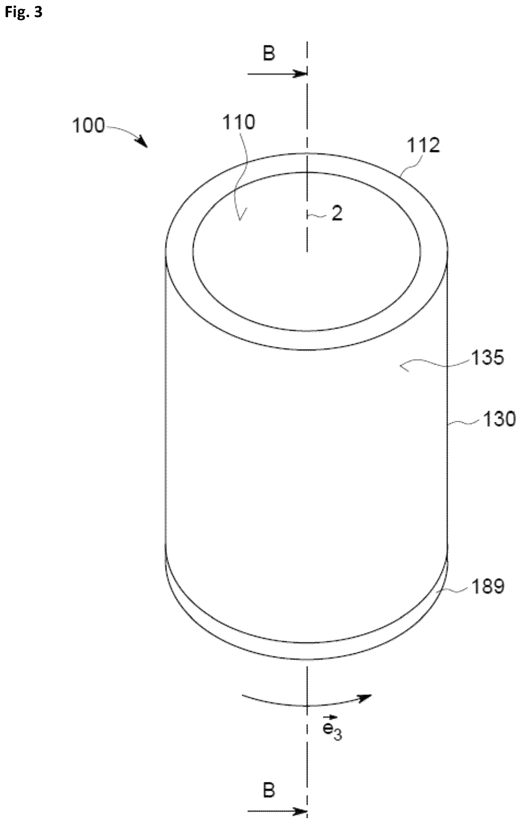

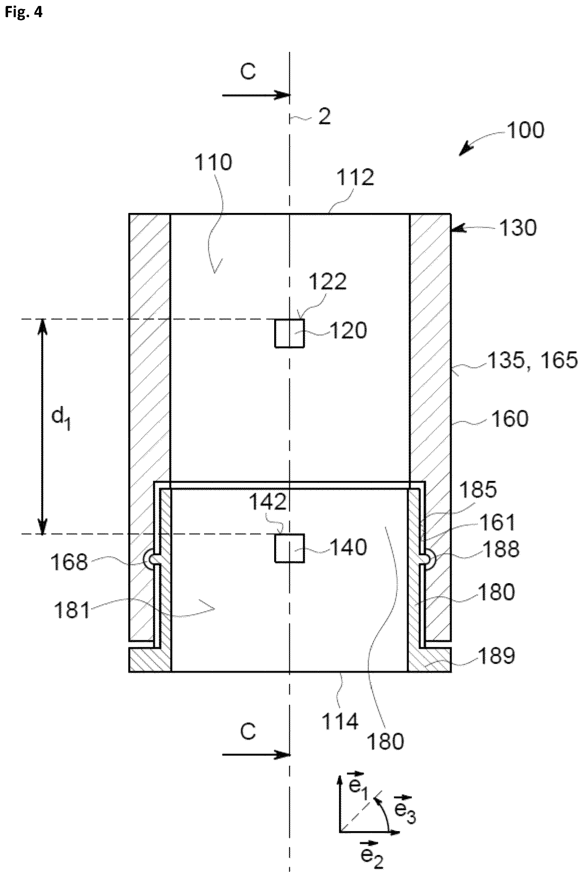

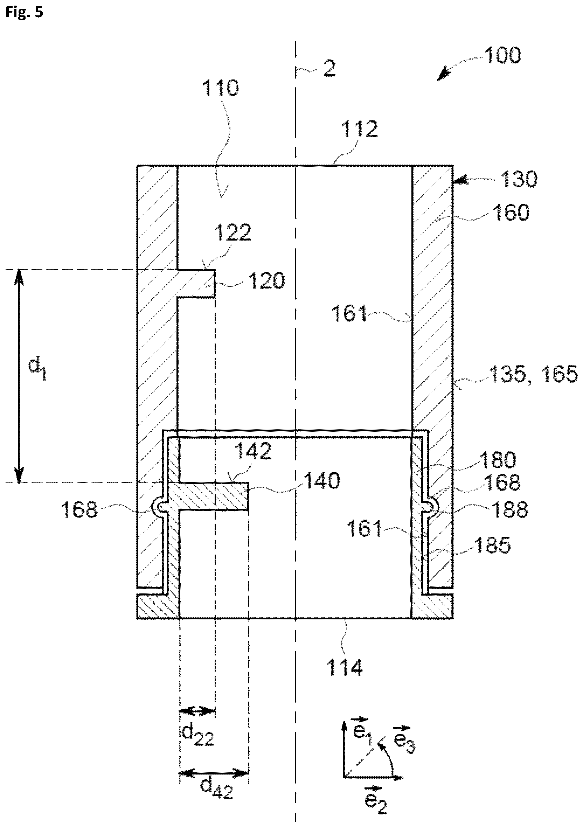

In another example (see FIG. 3 to 5), the body 130 of the gauge 100 can be at least a part of a conduit wall 130 and the gauge 100 hence may be or comprise a conduit 100. As can be seen, in FIGs. 4 and 5, the body 130 of the gauge 100 may comprise a first sleeve 160 and a second sleeve 180 forming a bearing 170, e.g. like in this example a radial bearing 170. One of the sleeves 160, 180 may have a peripheral surface 165, 185 that is radially supported by a portion of the inner surface 181, 161 of the respective other sleeve 180, 160. As shown, for example the peripheral surface 185 may be a bearing surface 185 and the as well the inner surface 161 may be a bearing surface 161, but of course the surfaces 165, 181 could, alternatively or in addition, as well be bearing surfaces 165, 181.

An optional flange 189 at an end of one of the two sleeves 180 may abut the corresponding end of the respective other sleeve 160, thereby providing a positive locking of the sleeves 160, 180 in the first direction *̅e̅*̅₁, while providing a labyrinth gasket at least reducing a fluid flow through the gap between the inner surface 161 and the peripheral surface 185. Optionally, one of the two sleeves 180 may have a radial projection 188 that may engage into an annular groove 168 of the respective other sleeve 160. This measure contributes to maintaining the sleeves in their respective relative axial positions, while further reducing a fluid flow across the gap between surfaces 161 and 185.

Like in the presented example, the two inner surfaces 161, 181 may preferably be at least essentially flush, to thereby keep the flow resistance of the conduit 100 (which may be considered as the gauge 100) low.

The two inner surfaces 161, 181 may be considered as the inner surface of the conduit 100 and hence as the first surface 110 of the gauge 100.

As presented, the inner surface 110 of the conduit 100 may be the first surface 110, but it could as well be the peripheral surface 135. In both alternatives, the longitudinal axis 2 becomes the cylinder axis 2 and usage of cylinder coordinates (*h*, *r*, *φ*) simplifies the description. In the context of this example, one may assume that *̅e̅*̅₁ points parallel to the cylinder axis (h - height), *̅e̅*̅₂ may point in the radial direction (r -radius) and *̅e̅*̅₃ may point in the azimuthal direction ( *φ* - angular coordinate). Again, it is noted that this convention is only an example simplifying the construction and its description. Going back to the example in FIG. 3 to 5 the inner surface 110 may have portions (inner surfaces 161, 181) being movably supported relative to each other by a rotational bearing 170.

Like the example of FIG. 1 and 2, the gauge 100 of the example of FIG. 3 to 5 may comprise a protrusion 120 and a protuberance 140, and the description of FIG. 1 and 2 may be read on FIG. 3 to 5 mutatis mutandis: The location of the protrusion 120 may preferably be fixed relative to the first sleeve 160 of body 130 and hence to the portion of the first surface 110 being defined by the first sleeve 160. The protrusion 120 may hence be attached to or unitary with the first sleeve 160. Similarly, the protuberance 140 may be attached to (or be unitary with) the second sleeve 180. Due to the bearing 170, the protuberance 140 and the protrusion 120 may be moved relative to each other with respect to the third direction *̅e̅*̅₃, which may be the azimuthal direction. The latter is not required but a result of the rotational axis 2 of the bearing 170 being aligned with the cylinder axis 2 (i.e. the conduit axis), but this angular relation is only optional.

Like in FIGs. 1 and 2 the protrusion 120 and the protuberance 140 may have a first block surface 122 and a second block surface 142, respectively. As well the distance *d*₁ of the first block surface 122 and a second block surface 142 measured in the first direction *̅e̅*̅₁ may be at least essentially constant. The extensions *d*₂₂ and *d*₄₂ of the protrusion 120 and protuberance 140 in the second direction e̅₂, respectively, to the first surface 110 are preferably different from each other (i.e. preferably *d*₂₂ ≠ *d*₄₂). The distance *d*₃, being measured in the third direction *̅e̅*̅₃ (which may be like in this example the azimuthal direction), however, can be adjusted as required during use of the gauge 100 due to the bearing 170. In the depicted example *d*₃ is zero and hence not depicted (c.f. FIG. 1 and 2).

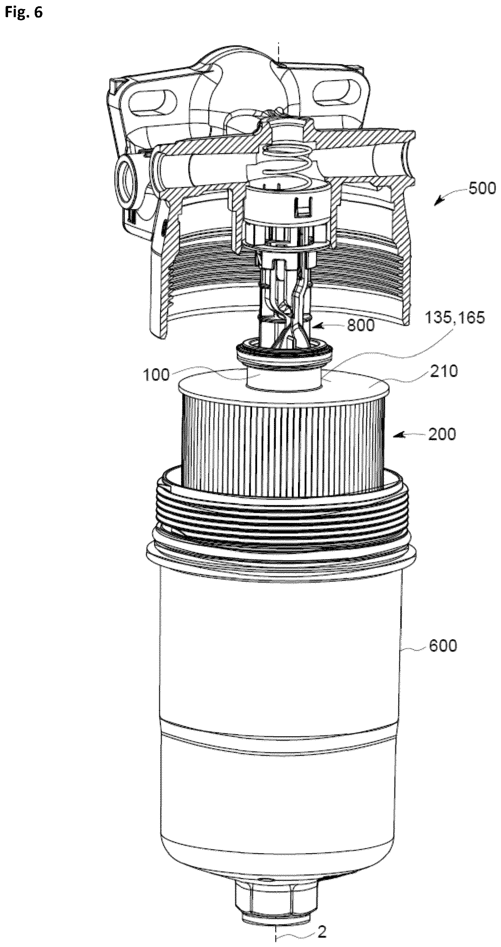

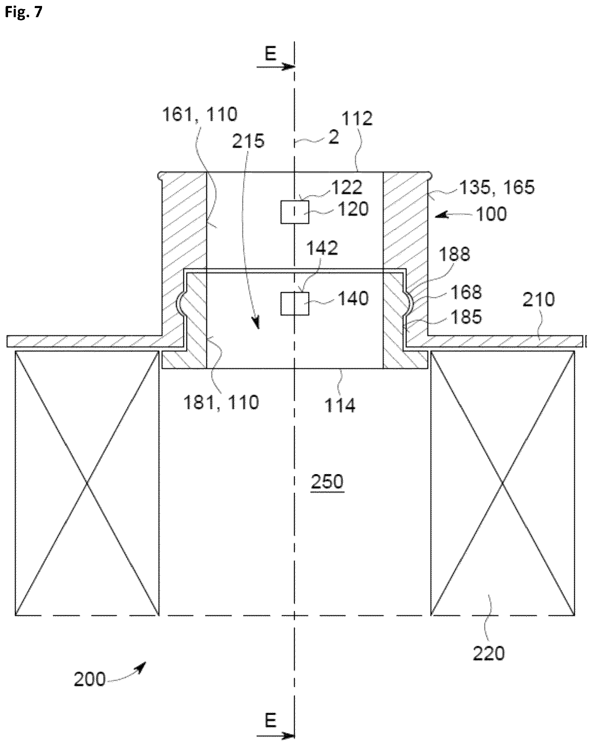

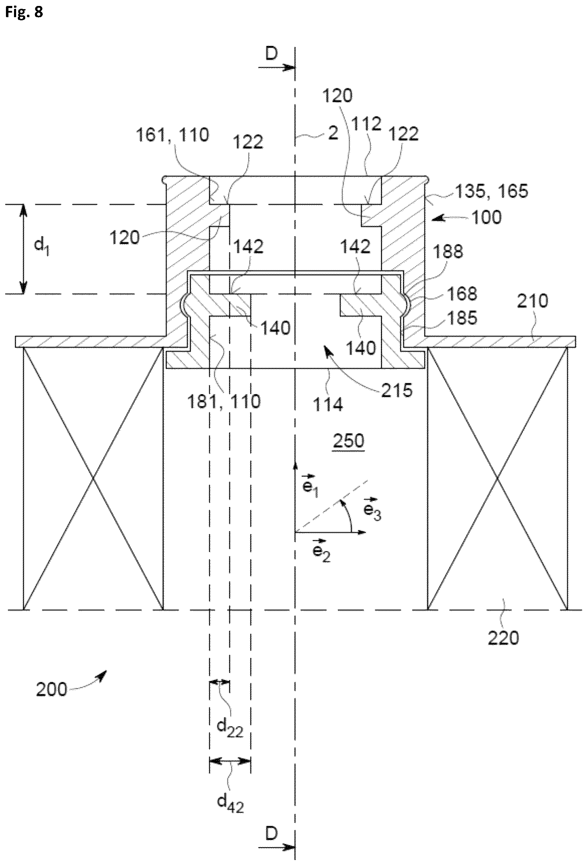

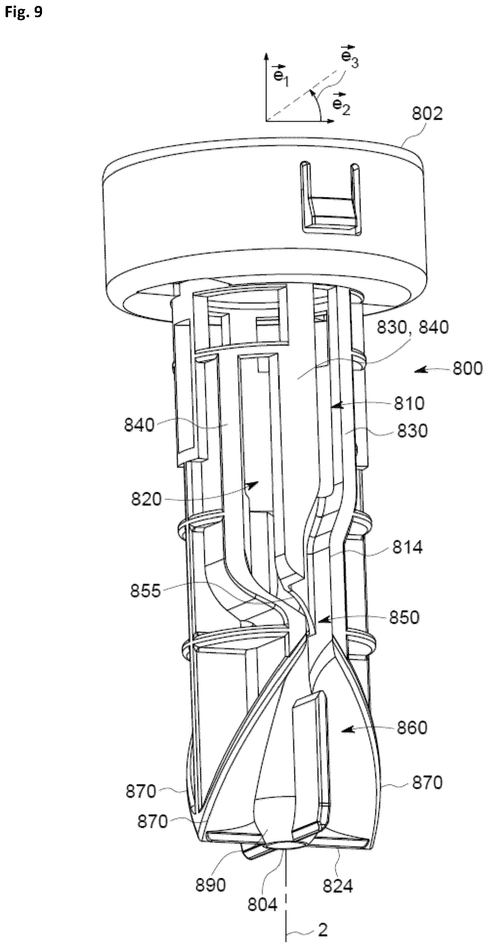

FIG. 6 shows a partially mounted filter system with a filter housing socket 500 and fluid filter insert 200 for a fluid filter housing, e.g. for a fluid filter housing comprising the filter housing socket 500. To complete the filter system, the fluid filter insert 200 is advanced until it abuts the filter housing socket 500. While advancing the fluid filter insert, a guide tube 800 (see as well FIG 9) takes the function of a counterpart 800 of the gauge 100 (see FIG. 7 and 8) of the fluid filter insert 200. The guide tube 800 can hence be considered as an example counterpart 800.

Once the fluid filter insert 200 is fully advanced, a filter housing cover 600 may be attached to the filter housing socket 500 to keep the fluid filter insert 200 in place.

The fluid filter insert 200 as shown in FIG. 7 and 8 may comprise a gauge 100 being very similar to the gauge 100 in FIGs. 3 to 5 and hence to the conduit 100 in these figured: In more detail, the gauge 100 is an integral part or the fluid filter insert 200: The fluid filter insert 200 may comprise a filter medium 220 in between of two optional end caps 210 (c.f. FIG. 6). The filter medium 220 may have a central fluid channel 250 (see FIG. 7 and 8) that may be in fluid communication with a through hole 205 in the so-called front-end cap 210. The gauge 100 (the conduit 100) may be attached to and/or integrated in the front-end cap 210 as shown in FIGs. 7 and 8. The only difference between the gauges 100 in Figs. 3 to 5 and FIGs. 7 and 8 is the number of the protrusions 120 and protuberances 140. The example gauge 100 in FIGs. 7 and 8 has two of each, but any other positive integer number is possible. In essence there is at least one protrusion 120 and at least one protuberance 140. Beyond, the description of FIGs 3 to 5 maybe read on FIG. 7 and 8 as well. As can be seen from FIGs. 7 and 8 the gauge 100 may be integrated in a conduit 100 of the fluid filter insert 200 for attaching the fluid filter insert 200 to a socket 500 (compare FIG. 6) of a fluid filter housing.

FIG. 9 shows a counterpart 800 for the gauge 100 in FIG. 7 and 8. The counterpart can be an integral part of a filter housing or any other structure. In FIG. 6, the counterpart 800 takes the function of a guide tube 800 of the filter housing socket 500 and the two terms will be used interchangeably in the context of the description of the drawings.

The counterpart 800 in FIG. 9 has a has a distal end 804 being configured to be inserted into the gauge 100 of e.g. a fluid filter insert 200. In other words, the gauge 100 is preferably configured to be advanced from the distal end 804 over the counterpart 800 towards the opposite proximal end 802 (c.f. FIG. 6).

As presented in FIG.9, the counterpart 800 may comprise at least one first guide rail 810 and at least one second guide rail 820 being formed by respective webs 830, 840. The webs 830, 840 may extend radially, e.g. from a core structure 890 with a gap in between thereby forming the guide rails 810, 820.

Starting from the proximal end, the first guide rail 810 and the second guide rail 820 may extend towards a rail switch 850 where they are joined into an initial (distal) guide rail 860 being delimited by distal webs 870. As can be seen, the width of the initial guide rail 860 (i.e. the distance between the distal webs 870 measured in the third direction *̅e̅*̅₃) may decrease from the distal end 804 of the counterpart 800 towards the switch 850.

In other words, starting at the distal end 804, the initial guide rail 860 is tapered until it bifurcates in a switch 850 into the first guide rail 810 and the second guide rail 820. The first guide rail 810 may preferably have different depth (measured in the second direction *̅e̅*̅₂ ) than the second guide rail 820. The guide rail 810, 820 with the lower depth (the shallower guide rail 810) may extend, at least in the switch 850, at least essentially parallel to the first direction *̅e̅*̅₁. The deeper guide rail 820 may extend, at least in the switch 850, obliquely to the first direction *̅e̅*̅₁.

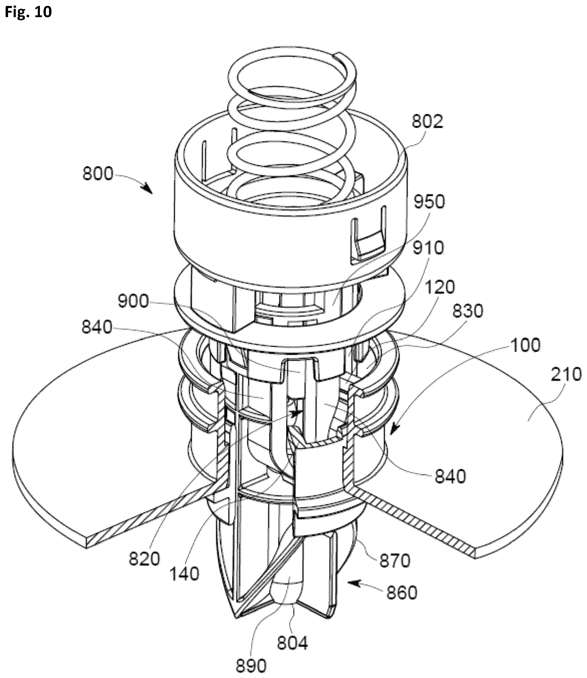

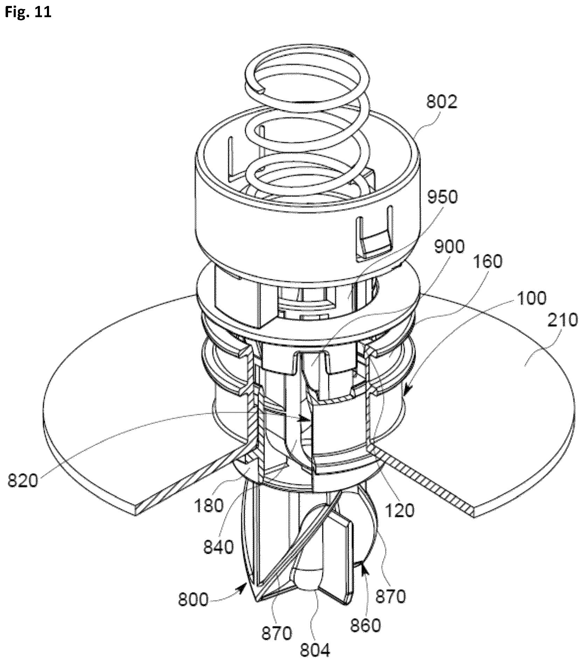

When advancing a gauge 100 like the gauges shown in FIG. 3 to 8 from the distal end onto the counterpart 800, the protrusion 120 and the protuberance 140 may initially engage into the initial guide rail 860 and while continuing to move the gauge into the first direction *̅e̅*̅₁, the protrusion 120 and the protuberance 140 move relative to each other in the third direction *̅e̅*̅₃ until they subsequently enter the distal end of the switch 850. The shorter one of the protrusions 120 and the protuberance 140 may enter into the first guide rail 810 and the longer one may enter the second guide rail 820. In this sense the switch 850 may be considered selective with respect to the extension of the protrusion 120 and the protuberance 140, which can be obtained by a fixed switch tongue 855 configured to allow the shorter one of the protrusion 120 and the protuberance 140 to pass in the first direction *̅e̅*̅₁ whereas the longer one of the protrusion 120 and the protuberance 140 slides along the distally facing side of the switch tonge 855 into a direction being a superposition of the first direction *̅e̅*̅₁ and the third direction *̅e̅*̅₃ into the deeper second guide rail. The situation occurring once the protrusion 120 and the protuberance 140 passes the switch is shown in FIG. 10. As can be seen, the counterpart may comprise a shifting member 900. The shifting member 900 as well has a guide rails, herein referred to as third guide rail 910 and fourth guide rail 920. In FIG. 10, the third guide rail 910 is aligned with the first guide rail 810 and the protrusion can hence be advanced in the first direction *̅e̅*̅₁, whereas the distal end of the fourth guide rail is not (yet) aligned with the second rail 820, i.e. the protuberance 140 would be blocked from being further advanced in the first direction *̅e̅*̅₁. However, as apparent from FIG. 11, the third guide rail 910 may extend in a direction being a superposition of the first direction *̅e̅*̅₁ and the third direction *̅e̅*̅₃, and hence shifting the gauge 100 in the first direction causes the shifting member 900 to be shifted into a second position, wherein in the second position the distal end of the fourth guide rail 920 is aligned (FIG. 11 alignment is not finished) with the corresponding portion of the second guide rail 820 thereby providing a passage for the protuberance 140 as shown in FIG. 12 and the gauge 100 can be further advanced as shown in FIGs. 12 and 13. When reaching the final position as shown in FIG. 13, the gauge 100 may actuate a fluid flow control means 950 such as a valve member or a housing cover blocking member or switch configured for signaling that the gauge and in the depicted example the filter insert has reached its intended position.

### Clarifying explanations:

Only to avoid misunderstandings, if features are indicated to be optional be it be explicit use of "optionally", "preferably", "may have", "may comprise" or the like, such features may be omitted, replace other features (i.e. be alternatives to other features, "or"-conjunction) or be combined with other features ("and"-conjunction) unless such combination is self-conflicting and hence not possible. *"Alternatively or in addition"* expresses that a feature can be combined with other features, replace these or can be omitted.

*ε* ∈ *A, A* = {*a*, *b, c* } shall be understood as usual that epsilon may equal any member a, b, c of the set A. As usual, the term *n^{th}*-coordinate (*n* ∈ {1, 2, 3} references to the extension of a vector in the respective *n^{th}-* direction *e̅ₙ*. The vector may indicate, e.g. a position or a difference between two positions.

### Deletions are no prejudice

In the course of the proceedings claims, text passages, features and combinations of features may be deleted, be it simple by omission, explicit cancellation, striking, or in any other way. None of these deletions is a waiver to reintroduce the claims, text passages, features and combinations of features in the application or to future divisional applications. Deleted content of the application as initially files is not abandoned. In other words, any deletion is without prejudice to the filing of one or more divisional application or usage of the deleted subject matter for any other purpose during prosecution of the present or any future divisional application. This paragraph may be deleted when preparing the text in which the examining division intends to grant a patent, but as well such deletion is without any prejudice to the filing of one or more divisional application or usage of the deleted subject matter for any other purpose during prosecution of the present or any future divisional application.

### List of reference numerals

- 2: longitudinal axis/ cylinder axis

- 100: gauge, e.g. a conduit
- 110: first surface
- 112: front-end
- 114: rear-end

- 120: protrusion
- 124: first block surface

- 130: body, e.g. conduit wall
- 135: peripheral surface of body/conduit wall 130
- 140: protuberance
- 142: second block surface
- 160: first sleeve
- 161: inner surface of first sleeve 160
- 165: peripheral surface of first sleeve 160

- 170: bearing
- 180: second sleeve
- 181: inner surface of second sleeve 180
- 185: peripheral surface of second sleeve 180

- 200: fluid filter insert
- 210: front-end cap
- 215: through hole
- 220: filter medium
- 230: rear-end cap
- 500: filter housing socket
- 600: filter housing cover
- 800: counterpart, e.g. guide tube/guide tube, e.g. filter housing socket 500

- 802: proximal end of counterpart
- 804: distal end of counterpart
- 810: first guide rail (preferably shallower than second guide rail)
- 820: second guide rail (preferably deeper than first guide rail)
- 830: web
- 840: web
- 850: switch / guide rail switch
- 855: switch tongue
- 860: initial guide rail / distal guide rail
- 870: web
- 890: core structure
- 900: shifting member
- 910: third guide rail
- 920: fourth guide rail
- 950: fluid flow control means

- *̅e̅*̅₁: first direction
- *̅e̅*̅₂: second direction
- *̅e̅*̅₃: third direction

- *d*₁: distance of block surfaces 122, 142 in the first direction *̅e̅*̅₁
- *d*₂₂: distance
- *d*₂₄: distance

## Claims

1. A fluid filter insert (200) with a gauge (100), wherein
- the gauge (100) has a first surface (110) extending along or parallel to a longitudinal axis (2)
- the longitudinal axis (2) extends parallel to a first direction,
- the first surface (110) has a front-end (112) and a rear-end (114),
- the gauge comprises at least one protrusion (120),
- the gauge comprises at least one protuberance (140),
- the protuberance (140) and the protrusion (120) extend relative to the first surface (110) in a second direction and define an extension (*d*₄₂) of the protuberance (140) in the second direction (*̅e̅*̅₂) and an extension (*d*₂₂) of the protrusion (120) in the second direction (*̅e̅*̅₂),
**characterized in that**
at least one bearing (170) movably supports the at least one protuberance (140) relative to the at least one protrusion (120) and allows for a movement of the of the protuberance (140) relative to the protrusion (120) in a third direction *̅e̅*̅₃.

2. The fluid filter insert (200) of claim 1, **characterized in that**:
- the protrusion (120) defines a first block surface (122) facing towards the front-end of the first surface,
- the protuberance (140) defines a second block surface (142) facing towards the front-end of the first surface, and
- a first distance from the first block surface (122) to the front-end 112 is smaller or greater than a first distance from the second block surface (142) to the front-end (112).

3. The fluid filter insert (200) of one of the previous claims, **characterized in that** the extension (*d*₂₂) of the protrusion (120) in the second direction *̅e̅*̅₂ over the first surface (110) differs from the extension (*d*₄₂) of the protuberance (140) in the second direction *̅e̅*̅₂ over the first surface (110).

4. The fluid filter insert (200) of one of the previous claims, **characterized in that** the first surface (110) is a first cylinder surface (110) with a cylinder axis (2) and **in that** the first cylinder surface (110) is at least a portion of an inner surface of a conduit (100) or at least a portion of a peripheral surface of the conduit (100) and **in that** the longitudinal axis (2) is the cylinder axis (2) and **in that** the bearing (170) is a rotary bearing defining a rotational axis (2) and **in that**:
a. the distance of the protrusion (120) to the rotational axis (2) is smaller or greater than the distance of the protuberance (140) to the rotational axis (2), and/or
b. the first cylindrical surface (110) is a peripheral surface of a conduit (100) and **in that** the distance between the radially outward pointing end of the protrusion (120) and the rotational axis (2) is smaller or greater than the distance between the radially outward pointing end of the protuberance (140) and the rotational axis (2).

5. The fluid filter insert (200) of one of the previous claims, **characterized in that** a/the rotational axis (2) is parallel to the longitudinal axis (2) within an error margin of ±*δ*, wherein *δ* ∈ {45°, 30°, 15°, 10°, 5°, 2.5°, 1°, 0.5°, 0°}.

6. The fluid filter insert (200) of claim 4 or 5, **characterized in that**:
- the conduit (100) has a conduit wall (130),
- the first surface (110) is defined by the conduit wall (130), and
- the protrusion (120) is firmly attached to and/or integrally formed with the conduit wall (130).

7. The fluid filter insert (200) of the previous claim, **characterized in that**:
- the conduit wall (130) comprises a first sleeve (160) and a second sleeve (180) being coupled by a rotary bearing (170),
- the first sleeve (160) has a bearing surface (161) movably supporting a bearing surface (185) of the second sleeve (180),
- the protuberance (120) is firmly attached to and/or integrally formed with the second sleeve (140) and extends from the second sleeve (140) in the same direction with respect to the longitudinal axis as the protrusion (120).
- the protrusion (120) is firmly attached to integrally formed with the first sleeve (160).

8. The fluid filter insert (200) of one of the claims 6 or 7, **characterized in that**:
- the first sleeve (160) or the second sleeve (180) has an annular grove, being centered on the rotational axis (2), and optionally
- the respective other sleeve (180, 160) has at least one projection (188), and
- the at least one projection (188) engages into the annular groove (168).

9. The fluid filter insert (200) of the previous claim, **characterized in that** at the least one engaging projection (188) is attached to and/or integrally formed by a land of the respective other sleeve (180, 160).

10. The fluid filter insert (200) of one of claims 7 to 9, **characterized in that** the protuberance (140) extends from
(i) an inner surface (181) of the second sleeve (180) towards the rotational axis (2) and/or longitudinal axis (2) and **in that** the inner surface (181) of the second sleeve (180) is flush with the inner surface (161) of the first sleeve (160), or
(ii) a peripheral surface (185) of the second sleeve (180) away from the rotational axis (2) and/or the longitudinal axis (2) and **in that** the peripheral surface (185) of the second sleeve (180) is flush with the peripheral surface (165) of the first sleeve (160).

11. The fluid filter insert (200) one of the claims 7 to 10, **characterized in that** the first sleeve (160) and/or the second sleeve (180) has a flange (189), wherein the flange (189) abuts an end of the respective other sleeve (180, 160).

12. A filter housing with a filter volume configured to receive a fluid filter insert (200), in particular to receive the fluid filter insert (200) of one of the previous claims, wherein:
- the filter housing comprises a socket (500) with a fluid duct configured to be connected to a/the conduit (100) of the fluid filter insert (200),
- the filter housing comprises a guide tube (800) with a distal end (804), wherein the distal end extends over the fluid duct into the filter volume configured to accommodate the filter insert (200),
- the guide tube (800) has a guide tube axis (2) extending parallel to a first direction *̅e̅*̅₁ and a peripheral surface,
- the guide tube's peripheral surface has a first groove (810) and a second groove (820) each having a groove opening facing in a second direction ±*̅e̅*̅₂ radially outwards relative to the guide tube axis (2), and
- the first groove (810) and the second groove (820) are open in the axial direction (2) at least towards the distal end (804) of the guide tube,
**characterized in that**
the distance between the first groove (810) and the second groove (820) measured in a third direction *̅e̅*̅₃ varies as a function of the first coordinate.

13. The filter housing of the previous claim, **characterized in that**:
- the filter housing further comprises a shifting member (900),
- the shifting member (900) is movably supported relative to the guide tube (800) and has at least a first position and a second position,
- the shifting member (900) comprises a third groove (910) and a fourth groove (920), each having an open first end facing towards the distal end (804) of the tube and a second end,
- when the shifting member (900) is in its first position, the open first end of the third groove (910) aligns with the first groove (810) and the open end of the fourth groove (920) does not align with the second groove (820), and **in that**
- when the shifting member (900) in its second position, the end section of the third groove (920) aligns with the first groove (810) and the open distal end of the fourth groove (920) aligns with the second groove (820).

14. The filter housing of the previous claim, **characterized in that**:
- the shifting member (900) has a third position, and **in that**
- if the shifting member (900) is in the third position, the open distal end of the fourth groove (920) does not align with the second groove (820) and the second end of the fourth groove (920) does align with the second groove (820).

15. A filter housing of one of claims 13 or 14, **characterized in that** the shifting member (900) is coupled to at least one of a valve member, a shifting member position sensor or a locking member and **in that** a movement of the shifting member from its first position into its second position and/or into its third position causes at least one of:
- a shift of the valve member from a closed position into an open position, thereby enabling a fluid flow from a fluid inlet of the fluid filter housing through the duct and/or from the duct to a fluid outlet of the fluid filter,
- the shifting member sensor to provide a signal being different from a signal of the shifting member sensor if the shifting member is in the first azimuthal position, and
- a locking member to free a closing path of a filter housing cover.

16. A kit or a filter system, comprising at least the fluid filter insert of one of claims 1 to 11 and/or a fluid filter with the fluid filter insert of one of claims 1 to 11 and/or the filter housing of one of claims 12 to 15.

## Amended claims

### Amended claims in accordance with Rule 137(2) EPC.

1. A fluid filter insert (200) with a gauge (100), wherein
- the gauge (100) has a first surface (110) extending along or parallel to a longitudinal axis (2)
- the longitudinal axis (2) extends parallel to a first direction,
- the first surface (110) has a front-end (112) and a rear-end (114),
- the gauge comprises at least one protrusion (120),
- the gauge comprises at least one protuberance (140),
- the protuberance (140) and the protrusion (120) extend relative to the first surface (110) in a second direction and define an extension (*d*₄₂) of the protuberance (140) in the second direction (*̅e̅*̅₂) and an extension (*d*₂₂) of the protrusion (120) in the second direction (*̅e̅*̅₂),
**characterized in that**
at least one bearing (170) movably supports the at least one protuberance (140) relative to the at least one protrusion (120) and allows for a movement of the of the protuberance (140) relative to the protrusion (120) in a third direction *̅e̅*̅₃.

2. The fluid filter insert (200) of claim 1, **characterized in that**:
- the protrusion (120) defines a first block surface (122) facing towards the front-end of the first surface,
- the protuberance (140) defines a second block surface (142) facing towards the front-end of the first surface, and
- a first distance from the first block surface (122) to the front-end 112 is smaller or greater than a first distance from the second block surface (142) to the front-end (112).

3. The fluid filter insert (200) of one of the previous claims, **characterized in that** the extension (*d*₂₂) of the protrusion (120) in the second direction *̅e̅*̅₂ over the first surface (110) differs from the extension (*d*₄₂) of the protuberance (140) in the second direction *̅e̅*̅₂ over the first surface (110).

4. The fluid filter insert (200) of one of the previous claims, **characterized in that** the first surface (110) is a first cylinder surface (110) with a cylinder axis (2) and **in that** the first cylinder surface (110) is at least a portion of an inner surface of a conduit (100) or at least a portion of a peripheral surface of the conduit (100) and **in that** the longitudinal axis (2) is the cylinder axis (2) and **in that** the bearing (170) is a rotary bearing defining a rotational axis (2) and **in that**:
a. the distance of the protrusion (120) to the rotational axis (2) is smaller or greater than the distance of the protuberance (140) to the rotational axis (2), and/or
b. the first cylindrical surface (110) is a peripheral surface of a conduit (100) and **in that** the distance between the radially outward pointing end of the protrusion (120) and the rotational axis (2) is smaller or greater than the distance between the radially outward pointing end of the protuberance (140) and the rotational axis (2).

5. The fluid filter insert (200) of one of the previous claims, **characterized in that** a/the rotational axis (2) is parallel to the longitudinal axis (2) within an error margin of ±*δ*, wherein *δ* ∈ {45°, 30°, 15°, 10°, 5°, 2.5°, 1°, 0.5°, 0°}.

6. The fluid filter insert (200) of claim 4 or 5, **characterized in that**:
- the conduit (100) has a conduit wall (130),
- the first surface (110) is defined by the conduit wall (130), and
- the protrusion (120) is firmly attached to and/or integrally formed with the conduit wall (130).

7. The fluid filter insert (200) of the previous claim, **characterized in that**:
- the conduit wall (130) comprises a first sleeve (160) and a second sleeve (180) being coupled by a rotary bearing (170),
- the first sleeve (160) has a bearing surface (161) movably supporting a bearing surface (185) of the second sleeve (180),
- the protuberance (120) is firmly attached to and/or integrally formed with the second sleeve (140) and extends from the second sleeve (140) in the same direction with respect to the longitudinal axis as the protrusion (120).
- the protrusion (120) is firmly attached to integrally formed with the first sleeve (160).

8. The fluid filter insert (200) of one of the claims 6 or 7, **characterized in that**:
- the first sleeve (160) or the second sleeve (180) has an annular grove, being centered on the rotational axis (2), and optionally
- the respective other sleeve (180, 160) has at least one projection (188), and
- the at least one projection (188) engages into the annular groove (168).

9. The fluid filter insert (200) of the previous claim, **characterized in that** at the least one engaging projection (188) is attached to and/or integrally formed by a land of the respective other sleeve (180, 160).

10. The fluid filter insert (200) of one of claims 7 to 9, **characterized in that** the protuberance (140) extends from
(i) an inner surface (181) of the second sleeve (180) towards the rotational axis (2) and/or longitudinal axis (2) and **in that** the inner surface (181) of the second sleeve (180) is flush with the inner surface (161) of the first sleeve (160), or
(ii) a peripheral surface (185) of the second sleeve (180) away from the rotational axis (2) and/or the longitudinal axis (2) and **in that** the peripheral surface (185) of the second sleeve (180) is flush with the peripheral surface (165) of the first sleeve (160).

11. The fluid filter insert (200) one of the claims 7 to 10, **characterized in that** the first sleeve (160) and/or the second sleeve (180) has a flange (189), wherein the flange (189) abuts an end of the respective other sleeve (180, 160).

12. A filter housing with a filter volume configured to receive a fluid filter insert (200), in particular to receive the fluid filter insert (200) of one of the previous claims, wherein:
- the filter housing comprises a socket (500) with a fluid duct configured to be connected to a/the conduit (100) of the fluid filter insert (200),
- the filter housing comprises a guide tube (800) with a distal end (804), wherein the distal end extends over the fluid duct into the filter volume configured to accommodate the filter insert (200),
- the guide tube (800) has a guide tube axis (2) extending parallel to a first direction *̅e̅*̅₁ and a peripheral surface,
- the guide tube's peripheral surface has a first groove (810) and a second groove (820) each having a groove opening facing in a second direction ±*̅e̅*̅₂ radially outwards relative to the guide tube axis (2), and
- the first groove (810) and the second groove (820) are open in the axial direction (2) at least towards the distal end (804) of the guide tube,
**characterized in that**
the distance between the first groove (810) and the second groove (820) measured in a third direction *̅e̅*̅₃ varies as a function of a first coordinate.

13. The filter housing of the previous claim, **characterized in that**:
- the filter housing further comprises a shifting member (900),
- the shifting member (900) is movably supported relative to the guide tube (800) and has at least a first position and a second position,
- the shifting member (900) comprises a third groove (910) and a fourth groove (920), each having an open first end facing towards the distal end (804) of the tube and a second end,
- when the shifting member (900) is in its first position, the open first end of the third groove (910) aligns with the first groove (810) and the open end of the fourth groove (920) does not align with the second groove (820), and **in that**
- when the shifting member (900) in its second position, the end section of the third groove (920) aligns with the first groove (810) and the open distal end of the fourth groove (920) aligns with the second groove (820).

14. The filter housing of the previous claim, **characterized in that**:
- the shifting member (900) has a third position, and **in that**
- if the shifting member (900) is in the third position, the open distal end of the fourth groove (920) does not align with the second groove (820) and the second end of the fourth groove (920) does align with the second groove (820).

15. A filter housing of one of claims 13 or 14, **characterized in that** the shifting member (900) is coupled to at least one of a valve member, a shifting member position sensor or a locking member and **in that** a movement of the shifting member from its first position into its second position and/or into its third position causes at least one of:
- a shift of the valve member from a closed position into an open position, thereby enabling a fluid flow from a fluid inlet of the fluid filter housing through the duct and/or from the duct to a fluid outlet of the fluid filter,
- the shifting member sensor to provide a signal being different from a signal of the shifting member sensor if the shifting member is in the first azimuthal position, and
- a locking member to free a closing path of a filter housing cover.

16. A kit or a filter system, comprising at least the fluid filter insert of one of claims 1 to 11 and/or a fluid filter with the fluid filter insert of one of claims 1 to 11 and/or the filter housing of one of claims 12 to 15.
